# FASCICULE DE BREVET EUROPEEN

(11) **EP 1 179 406 B1**
(45) Date de publication et mention de la délivrance du brevet: **24.03.2004**
(21) Numéro de dépôt: 01117834.0
(22) Date de dépôt: 23.07.2001
(51) Int. Cl.: B29C 45/42, B29C 45/14

(54) **Procédé et dispositif pour le moulage d'un appui**
Verfahren und Vorrichtung zum Formen eines Stützkörpers
Method and apparatus for moulding a support

(30) Priorité: 03.08.2000 FR 0010291
(43) Date de publication de la demande: 13.02.2002
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: Demin, Stéphane, 38080 l'Isle d'Abeau (FR)
(74) Mandataire: Bauvir, Jacques

(56) Documents cités:
- EP-A- 1 000 728
- US-A- 4 732 726
- PATENT ABSTRACTS OF JAPAN vol. 1995, no. 2, 31 mars 1995 (1995-03-31) -& JP 06 328502 A (SUMITOMO HEAVY IND LTD), 29 novembre 1994 (1994-11-29)

## Description

La présente invention se rapporte à la fabrication de bandages élastiques comme les appuis utilisés à l'intérieur de pneumatiques pour supporter la charge en cas de crevaison. Plus précisément, elle concerne les procédés et les dispositifs de fabrication des appuis comportant à leur base une ceinture sensiblement inextensible réalisée par exemple au moyen de fils de renforcement du genre de ceux renforçant usuellement les pneumatiques.

Dans la présente description, le terme "fil" désigne en toute généralité aussi bien des monofilaments que des multifilaments ou des assemblages comme des câbles, des retors ou encore tout type d'assemblage équivalent, et ceci quels que soient la matière et le traitement de ces fils. Il peut s'agir par exemple de traitements de surface, enrobage ou pré-encollage pour favoriser l'adhérence sur les matières de moulage associées.

La demande de brevet EP 0 796 747 décrit de tels appuis et la demande de brevet EP 1 000 728 décrit un procédé particulier de fabrication de tels appuis.

Le procédé décrit dans la demande de brevet EP 1 000 728 consiste à mouler un appui dans une cavité de moulage où l'on a préalablement disposé une ceinture de renforcement circonférentiel flexible. Cette ceinture est ainsi rendue solidaire de la matière de moulage et est destinée à conférer certaines propriétés mécaniques à l'appui réalisé. Le dispositif décrit dans le document EP 1 000 728 comprend une cavité de moulage disposée autour d'un noyau sensiblement cylindrique dont la circonférence peut varier entre une configuration de moulage où le diamètre du noyau correspond au diamètre de référence de l'appui et une configuration réduite (dite de démoulage) où la circonférence est inférieure au produit dudit diamètre de référence et du nombre π. Les principales étapes de la fabrication sont les suivantes:
- on dépose une ceinture (préfabriquée de toute manière appropriée) contenant les fils de renforcement autour du noyau dans sa configuration réduite (configuration de démoulage),
- on établit la configuration de moulage du noyau (diamètre de référence),
- on ferme le moule,
- on procède au remplissage du moule sous pression (par injection ou transfert),
- on ouvre le moule,
- on extrait l'appui moulé.

Ce procédé connu comporte plusieurs étapes qui constituent un cycle de fabrication relativement long. Le temps nécessaire au remplissage du moule et à la réticulation de la matière moulée est variable en fonction principalement de la matière utilisée pour le moulage, des différentes températures de régulation, des dimensions générales de l'appui mais surtout des épaisseurs locales des différentes parties de l'appui. En particulier, le temps nécessaire à la réticulation suffisante de la matière moulée (pour une tenue compatible avec les contraintes de démoulage et de manutention) représente une part importante et a priori incompressible du temps de cycle. Par exemple, dans le cas d'un appui réalisé en caoutchouc, sa réticulation dure plusieurs minutes. Une autre part importante du temps de cycle correspond aux opérations de préparation du moulage et d'évacuation de l'appui moulé. En effet, la mise en place de la ceinture de renfort avant l'opération de moulage est délicate car on doit s'assurer de son bon positionnement par rapport à la cavité de moulage. De même, l'extraction de l'appui après le moulage est également délicate et demande un effort important de la part de l'opérateur, surtout dans le cas de grandes dimensions. Ces opérations sont donc relativement longues et nécessitent une immobilisation conséquente de l'outil de production. De plus, le moule étant naturellement ouvert pendant ces manipulations, un échange thermique important a lieu et a tendance à refroidir le moule, ce qui ralentit la réticulation du moulage suivant. Egalement, si ces opérations sont réalisées manuellement, ceci exige une disponibilité de main d'oeuvre à des moments précis du cycle de fabrication afin de ne pas pénaliser encore la productivité de la machine par un temps d'attente supplémentaire. Si la mise en place de la ceinture dans le moule est réalisée manuellement par la personne qui vient de procéder à l'extraction de l'appui moulé lors du cycle précédent, cette personne doit d'abord déposer l'appui fini avant d'être en mesure de se saisir d'une ceinture de renfort et de venir la positionner à l'intérieur du moule, ceci constituant à nouveau un temps machine non productif. D'autre part, la température généralement élevée des moules complique également ces manipulations.

Du fait de la durée et de la variabilité de cette durée d'immobilisation et donc d'ouverture du moule, la régulation de la température des différentes parties du moule est rendue complexe. En effet, si cette durée est variable, le refroidissement naturel des parois du moule devient également variable.

Un objectif de l'invention est de permettre de réduire la durée moyenne d'un cycle de fabrication par rapport au procédé connu. Un autre objectif de l'invention est de réduire la dépendance du procédé en terme de disponibilité de la main d'oeuvre afin, en particulier, de rendre le fonctionnement de l'outil de production plus efficace et plus régulier ce qui a également pour conséquence une plus grande homogénéité de la production donc potentiellement un meilleur contrôle de la qualité fabriquée. Un autre objectif de l'invention est de permettre de réaliser les opérations de chargement et de déchargement de la presse sans devoir extraire le moule ou une partie de celui-ci de la presse. Un autre objectif de l'invention est un dispositif le plus compact possible afin d'utiliser des presses courantes et non spécifiquement dimensionnées pour cette application. Un autre objectif de l'invention est un procédé et un dispositif permettant une automatisation importante, voire totale, de la fabrication.

Le procédé et le dispositif de l'invention permettent d'atteindre ces différents objectifs et d'autres qui apparaîtront lors de la description de modes préférés de réalisation.

L'invention consiste en un procédé de fabrication d'un appui destiné à être monté sur une jante de véhicule, ledit appui ayant un axe A, une base limitée par une face radialement intérieure sensiblement cylindrique destinée à être montée autour de ladite jante, un sommet destiné à supporter la charge et un corps reliant ladite base audit sommet, ladite base comprenant un renforcement circonférentiel sensiblement inextensible, ledit corps comportant une pluralité d'évidements sensiblement axiaux débouchant d'un côté au moins dudit appui, ledit procédé de fabrication utilisant un moule d'axe correspondant audit axe A, ledit moule comprenant :
- un noyau intérieur pour le moulage de ladite face radialement intérieure,
- un anneau de moulage du sommet, ledit anneau comprenant au moins deux parties constitutives radialement mobiles l'une par rapport à l'autre, lesdites parties constitutives permettant de mouler une face radialement extérieure dudit sommet,
- au moins une coquille comportant une pluralité de doigts axiaux pour mouler latéralement ledit corps et lesdits évidements,
ledit noyau, ledit anneau et ladite coquille coopérant pour définir au moins partiellement une cavité de moulage fermée pour mouler ledit appui, ledit noyau comprenant au moins deux pièces constitutives et étant susceptible de prendre une configuration de moulage dans laquelle lesdites pièces constitutives forment une surface de moulage continue circonférentiellement pour mouler ladite face radialement intérieure, la surface de moulage étant définie par un diamètre de référence φ correspondant sensiblement au diamètre intérieur dudit appui, ledit noyau étant également susceptible de prendre une configuration de démoulage, définie par une longueur d'enveloppe E autour de ladite surface de moulage inférieure au produit du nombre π et du diamètre de référence φ, ledit procédé de fabrication comprenant les étapes suivantes :
- placer une ceinture comportant ledit renforcement circonférentiel autour dudit noyau,
- établir la configuration de moulage dudit noyau,
- fermer le moule,
- refouler sous pression dans ledit moule une matière injectable,
- ouvrir le moule,
- établir la configuration de démoulage dudit noyau,
- évacuer ledit appui moulé, ledit procédé étant caractérisé en ce que, lors d'un cycle de fabrication déterminé, ladite ceinture est introduite dans un volume décrit par le mouvement d'ouverture dudit moule avant qu'un appui moulé lors d'un cycle de fabrication précédent soit évacué dudit moule.

De préférence le procédé de l'invention est, de plus, caractérisé en ce que, lors d'un cycle de fabrication déterminé, ladite ceinture est placée autour dudit noyau avant qu'un appui moulé lors d'un cycle de fabrication précédent soit évacué dudit moule.

De préférence le procédé de l'invention est, de plus, caractérisé en ce que, ledit axe dudit moule étant sensiblement vertical, ledit noyau, ladite coquille et ledit anneau ayant des mouvements relatifs le long dudit axe lors de l'ouverture du moule, ledit appui moulé demeure maintenu, après son moulage, après l'ouverture du moule et avant son évacuation, en contact avec au moins une paroi de ladite cavité de moulage et en une position verticalement plus élevée qu'un plan médian dudit volume décrit par ledit mouvement d'ouverture.

De préférence le procédé de l'invention est, de plus, caractérisé en ce que, ladite ceinture étant introduite à l'aide d'un outil manipulateur, l'appui moulé lors dudit cycle précédent est évacué à l'aide dudit outil manipulateur.

De préférence le procédé de l'invention est, de plus, caractérisé en ce que l'étape d'introduction de ladite ceinture et l'étape d'évacuation dudit appui moulé sont réalisées par un déplacement sensiblement horizontal dudit outil manipulateur.

L'invention consiste également en un dispositif pour la fabrication d'un appui destiné à être monté sur une jante de véhicule, ledit appui ayant un axe A, une base limitée par une face radialement intérieure sensiblement cylindrique destinée à être montée autour de ladite jante, un sommet destiné à supporter la charge et un corps reliant ladite base audit sommet, ladite base comprenant un renforcement circonférentiel sensiblement inextensible, le corps comportant une pluralité d'évidements sensiblement axiaux débouchant d'un côté au moins dudit appui, ledit dispositif comprenant un moule d'axe correspondant audit axe A, ledit moule comprenant :
- un noyau intérieur pour le moulage de ladite face radialement intérieure,
- un anneau de moulage du sommet, ledit anneau comprenant au moins deux parties constitutives radialement mobiles l'une par rapport à l'autre, lesdites parties constitutives permettant de mouler une face radialement extérieure dudit sommet,
- au moins une coquille comportant une pluralité de doigts axiaux pour mouler latéralement ledit corps et lesdits évidements,
ledit noyau, ledit anneau et ladite coquille coopérant pour définir au moins partiellement une cavité de moulage fermée pour mouler ledit appui, ledit noyau comprenant au moins deux pièces constitutives et étant susceptible de prendre une configuration de moulage dans laquelle lesdites pièces constitutives forment une surface de moulage continue circonférentiellement pour mouler ladite face radialement intérieure, la surface de moulage étant définie par un diamètre de référence φ correspondant sensiblement au diamètre intérieur dudit appui, ledit noyau étant également susceptible de prendre une configuration de démoulage, définie par une longueur d'enveloppe E autour de ladite surface de moulage inférieure au produit du nombre π et du diamètre de référence φ, ledit dispositif étant caractérisé en ce que chacun des éléments d'un ensemble constitué par ledit anneau, ladite coquille et ledit noyau est mobile axialement par rapport aux autres éléments dudit ensemble.

De préférence le dispositif de l'invention est, de plus, caractérisé en ce que ledit axe dudit moule est sensiblement vertical.

De préférence le dispositif de l'invention est, de plus, caractérisé en ce que au moins une partie constituant ledit moule étant sensiblement fixe, d'autres parties constituant ledit moule étant mobiles le long de l'axe du moule, ledit dispositif permet un mouvement desdites parties mobiles orienté vers le bas afin d'ouvrir le moule.

De préférence le dispositif de l'invention est, de plus, caractérisé en ce que, ledit moule comprenant deux coquilles aptes à mouler latéralement des faces axiales respectivement opposées dudit corps, lesdites coquilles comportant des doigts aptes à mouler lesdits évidements, lesdits doigts d'une coquille apte à mouler une face dudit corps s'intercalent circonférentiellement entre lesdits doigts d'une coquille apte à mouler la face opposée.

De préférence le dispositif de l'invention est, de plus, caractérisé en ce qu'il comprend un outil manipulateur apte à se déplacer dans un plan sensiblement horizontal, ledit outil manipulateur étant apte à introduire ladite ceinture de renforcement circonférentiel et à évacuer ledit appui moulé.

De préférence le dispositif de l'invention est, de plus, caractérisé en ce que, l'outil manipulateur comportant une pluralité de surfaces de contact sensiblement verticales et radialement mobiles, ledit outil manipulateur est apte à maintenir radialement ladite ceinture dans une configuration sensiblement cylindrique, apte à positionner ladite ceinture dans l'axe du moule et apte à recueillir ledit appui moulé.

De préférence le dispositif de l'invention est, de plus, caractérisé en ce que, l'outil manipulateur comportant des moyens de maintien radial de ladite ceinture contre lesdites surfaces de contact, lesdits moyen sont des sources de dépression disposées au sein desdites surfaces de contact.

De préférence le dispositif de l'invention est, de plus, caractérisé en ce que, ledit outil manipulateur comportant une face supérieure généralement horizontale apte à porter ledit appui moulé, ledit appui moulé est, lors de son évacuation, maintenu relativement audit outil manipulateur par les forces de pesanteur.

Le procédé de l'invention peut s'appliquer à la fabrication d'appuis à partir de toute matière injectable, c'est-à-dire susceptible d'être introduite sous pression dans la cavité d'un moule. Une telle matière peut être constituée d'une composition de caoutchouc réticulable, d'une composition à base d'un polymère thermoplastique ou à base d'un polymère thermodurcissable tel qu'un polyuréthanne thermodurcissable.

A titre de composition de caoutchouc réticulable, on utilise préférentiellement une composition à base d'au moins un élastomère diénique. On entend de manière connue par élastomère diénique un élastomère issu au moins en partie (i.e. un homopolymère ou un copolymère) de monomères diènes (monomères porteurs de deux doubles liaisons carbone-carbone, conjuguées ou non).

Après admission dans le moule, la matière injectable acquiert les caractéristiques mécaniques finales nécessaires à son fonctionnement. S'il s'agit d'un élastomère ou d'une matière thermodurcissable, cette modification sera occasionnée par une réticulation. Dans le cas d'une matière thermoplastique, les caractéristiques mécaniques finales sont obtenues par refroidissement.

Dans la description qui va suivre, on a principalement illustré le cas de la fabrication d'un appui constitué d'une composition de caoutchouc réticulable.

La description des figures illustre des modes préférés de réalisation de l'invention. Aux différentes figures, on voit :
à la figure 1, un exemple d'appui réalisé selon le procédé de l'invention,
à la figure 2, un moule selon un mode préféré de réalisation de l'invention, installé dans une presse d'injection, en configuration de fermeture,
aux figures 3 à 14, les différentes étapes d'un mode préféré de réalisation du procédé de l'invention,
à la figure 15, une vue en perspective d'un mode de réalisation de l'outil manipulateur.

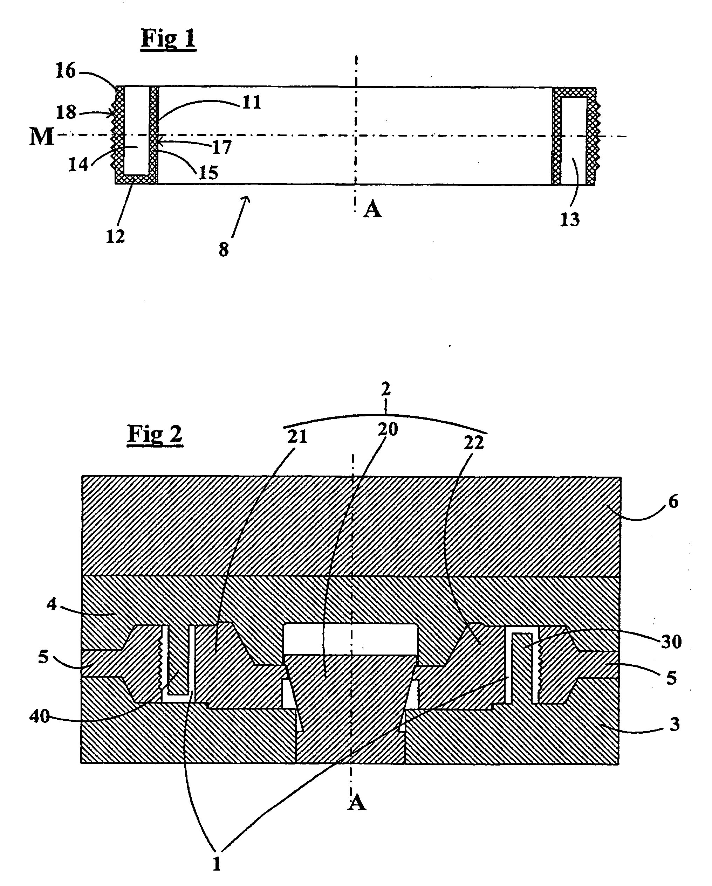

A la figure 1, on a représenté une vue en coupe d'un appui 8 qui peut être obtenu par le procédé de l'invention ou par celui décrit dans le document EP 1 000 728. L'appui 8, d'allure générale annulaire et d'axe A, est constitué d'une base 15 et d'un sommet 16 reliés par un corps 12. La surface radialement intérieure 17 de la base 15 est destinée à être fixée sur la jante d'un véhicule. La base 15 comprend une ceinture de renforcement circonférentiel 11 pratiquement inextensible dont le rôle est de maintenir l'appui serré sur la jante. Le sommet 16 de l'appui 8 comporte une surface radialement extérieure 18 apte à prendre appui contre le sommet d'un pneumatique pour porter la charge en cas de perte de pression du pneumatique. Cette surface radialement extérieure 18 peut comporter, comme c'est le cas sur cet exemple, des sillons et de bossages. Des évidements axiaux 13, 14 sont ménagés dans le corps 12 le long de sa circonférence. L'exemple représenté ici comporte une alternance d'évidements 13 s'ouvrant vers le bas de la figure et d'évidements 14 s'ouvrant vers le haut de la figure. Ainsi, l'appui 8 présenté ici est sensiblement symétrique par rapport à son plan médian M. D'autres configurations sont possibles car toutes les caractéristiques de l'appui 8 ne sont pas (comme on le comprendra lors de la description des figures suivantes) déterminantes en terme de procédé de moulage bien qu'elle implique généralement la mise en oeuvre d'un moule spécifique.

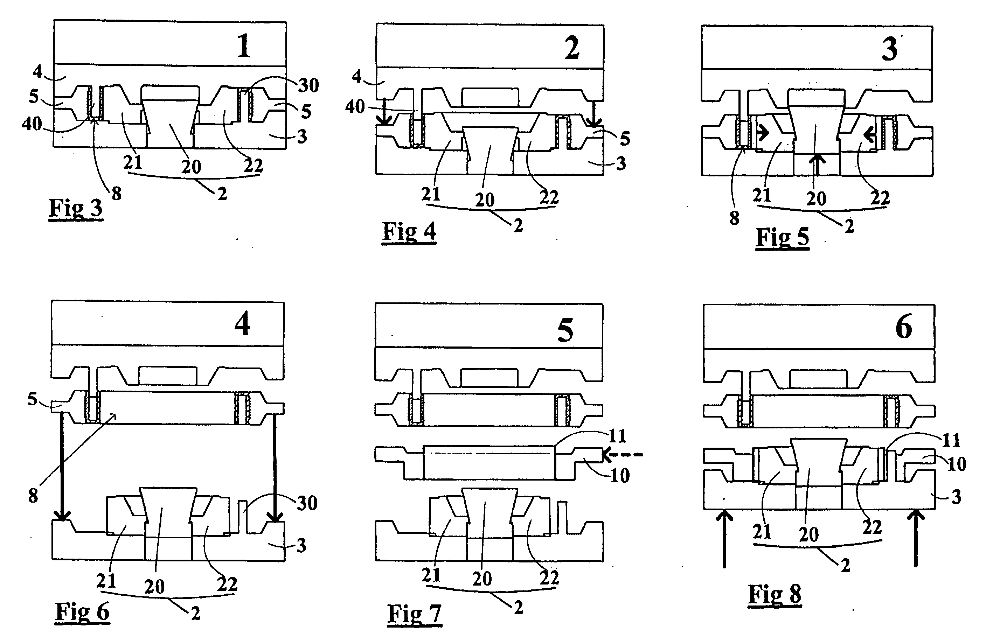

A la figure 2, on a représenté en coupe, en configuration de fermeture, un moule adapté à la fabrication de l'appui de la figure 1 selon un mode préféré de réalisation de l'invention. Ce moule d'axe A est apte à être installé, par exemple, dans une presse d'injection verticale. On aperçoit la cavité de moulage 1, à la forme de fabrication de l'appui 8 présenté plus haut. Cette cavité 1 est définie par les surfaces de moulage d'un noyau 2 et d'autres pièces que sont une coquille mobile 3, une coquille fixe 4 et un anneau 5 de moulage du sommet moulant la surface d'appui proprement dite 18, située radialement à l'extérieur de l'appui 8. Etant donné les sillons et bossages que l'on souhaite, dans cet exemple particulier, mouler sur la surface d'appui 18, l'anneau 5 de moulage du sommet est constitué d'une pluralité de parties, capables de s'écarter radialement les unes des autres afin de faciliter le démoulage. Les coquilles fixe 4 et mobile 3 sont représentées ici sous forme monobloc mais peuvent être dans la pratique constituées d'une pluralité de segments.

Le noyau 2 est constitué de plusieurs pièces. On a représenté sur cette vue trois pièces 20, 21, 22 mais d'autres dispositifs, décrits par exemple dans le document EP 1 000 728, sont utilisables pourvu qu'ils permettent de faire varier la circonférence de moulage dans une proportion permettant à la fois la pose du renforcement circonférentiel et le démoulage du produit fini. Sur cet exemple, un mouvement axial de la pièce centrale 20 peut commander un mouvement radial des pièces 21 et 22 constitutives de la surface de moulage.

Afin de mouler les évidements 13, 14 de l'appui 8, le moule comporte des doigts 40 faisant protubérance par rapport à la coquille fixe 4 et des doigts 30 faisant protubérance par rapport à la coquille mobile 3. Certains de ces doigts peuvent comporter un éjecteur, c'est-à-dire une partie mobile axialement qui peut aider le démoulage lorsque l'on commande son extension. Il résulte de la présence des doigts 30, 40 que la base 15 de l'appui 8 a une assez faible épaisseur radiale (typiquement inférieure à 15 mm), mesurée entre ladite face radialement intérieure 17 et l'un quelconque des évidements. Lors de l'injection (ou du transfert), le flux de matière injectée est confiné entre les doigts 30, 40 et les fils de renforcement disposés le long de la paroi radialement intérieure de la cavité de moulage. Une technique commode consiste à préfabriquer une ceinture 11 contenant les renforcements circonférentiels qu'il est nécessaire d'incorporer dans la base 15 de l'appui (voir par exemple le document EP 1 000 728). Cette ceinture 11 peut-être très flexible, ce qui rend délicate son installation correcte dans le moule. Alternativement, la ceinture 11 peut également comprendre une tôle métallique circonférentielle remplaçant totalement ou partiellement les fils de renforcement circonférentiel.

Le noyau 2 est susceptible de prendre une configuration de moulage dans laquelle les parties constitutives forment une surface de moulage continue circonférentiellement, image exacte de la forme finale de fabrication de la surface radialement intérieure 17 de la base 15 de l'appui 8. Cette configuration de moulage est caractérisée par un diamètre de référence φ correspondant au diamètre intérieur dudit appui. Au contraire lorsque le moule est, au moins partiellement, ouvert (voir également figure 4), c'est-à-dire que la coquille fixe 4 n'est plus en contact avec les parties 21 et 22 du noyau 2, le noyau 2 est aussi susceptible de prendre une configuration de démoulage, caractérisée par une longueur d'enveloppe des parties 21, 22 constitutives de la surface de moulage inférieure au produit du diamètre de référence φ et du nombre π.

L'élément 6 peut être un bloc à canaux régulés (connu en soi) assurant l'alimentation en matière injectable à une température contrôlée. Par exemple, pour une fabrication d'appuis en caoutchouc, la matière peut être acheminée jusqu'au moule à une température d'environ 80°C (température à laquelle la matière reste suffisamment fluide) alors que la température du moule est régulée aux alentours de 160°C pour une réticulation relativement rapide. La mise en oeuvre d'un tel bloc à canaux régulés 6 n'est pas essentielle pour le procédé de l'invention mais elle permet une réduction des pertes matière par rapport à l'alimentation directe.

La presse est dotée d'un mécanisme capable d'imprimer des mouvements axiaux d'éloignement et de rapprochement relatif des coquilles fixe et mobiles 3 et 4 et de l'anneau 5. Ce mouvement d'éloignement et de rapprochement relatif permet non seulement la fermeture et l'ouverture du moule, mais il peut commander aussi les mouvements spécifiques du noyau 2 et l'ouverture radiale de l'anneau 5 par des dispositifs de transmission bien connus.

La face radialement intérieure 17 de la base 15 de l'appui 8 peut comporter un ou des moyens d'ancrage prévus pour assurer le positionnement de l'appui sur la jante. Ces moyens peuvent prendre, par exemple, la forme d'un relief de plusieurs millimètres, annulaire ou constitué d'une pluralité d'éléments discrets le long de la circonférence de la face intérieure 17. Ces formes se retrouvent alors en négatif sur la surface de moulage du noyau 2 et imposent des conditions spécifiques pour leur démoulage.

Les figures décrivent un dispositif dont la partie haute est liée aux canaux d'admission de la matière injectable. Dans ces conditions, la partie haute du moule est préférablement fixe et la partie basse mobile pour réaliser l'ouverture du moule, dans ce cas vers le bas. Cette disposition est intéressante pour certains aspects particuliers comme la simplicité du dispositif de manutention comme on le verra plus loin dans la description. Cependant, le principe de l'invention ne s'oppose pas à une disposition inversée dans laquelle la partie basse serait fixe et la partie haute mobile.

Un mode de réalisation préféré du procédé de l'invention va maintenant être décrit étape par étape à l'aide des figures 3 à 14.

La figure 3 reprend le schéma (simplifié) de la figure 2 et montre l'étape de moulage de l'appui 8 que l'on choisit, pour la description, comme l'étape 1 (le numéro de chaque étape figure de façon très lisible sur le coin supérieur droit de chaque figure). Ce choix est bien sûr arbitraire puisque le procédé que l'on veut décrire est répété pratiquement à l'infini lors de la production en marche courante. Lors de cette étape le moule est fermé, la matière injectable a été admise sous pression à l'intérieur du moule et sa réticulation est en cours.

L'étape 2 (à la figure 4) est constituée par l'ouverture partielle du moule. Pour ce faire, on écarte la coquille fixe 4 de l'appui moulé 8 et des autres éléments du moule en déplaçant vers le bas l'ensemble comprenant l'appui fini 8, le noyau 2, l'anneau de moulage du sommet 5 et la coquille mobile 3. Les flèches verticales orientées vers le bas symbolisent ce mouvement. Les doigts 40 solidaires de la coquille fixe 4 sont partiellement ou totalement dégagés en fonction de l'amplitude du mouvement. Un démoulage partiel, comme sur cette figure, peut améliorer la tenue provisoire de l'appui dans l'anneau de moulage du sommet 5 et faciliter ainsi la suite du procédé. Cette étape 2 peut être déclenchée dès que l'appui moulé 8 est en mesure de résister à cette première opération de démoulage, c'est-à-dire dès que son état de réticulation lui permet de supporter les contraintes mécaniques associées au démoulage.

L'étape 3 (à la figure 5) est constituée par la réduction du noyau entraînant son démoulage. Les flèches montrent bien qu'un mouvement vertical de l'élément central 20 permet de commander un mouvement radial des parties 21 et 22 constitutives de la surface de moulage. Typiquement, la réduction du diamètre (plus exactement de la longueur d'enveloppe) du noyau est de l'ordre de 10 mm. Une partie seulement de cette réduction peut être suffisante pour permettre le démoulage. Dans certaines conditions (voir pour plus de détail le document EP 1 000 728), le démoulage peut même être effectué sans réduction préalable. Ceci peut alors permettre de combiner cette étape avec la suivante.

L'étape 4 (à la figure 6) est constituée par le démoulage de la coquille mobile 3 et des doigts 30 liés à celle-ci. Pour ce faire, on écarte la coquille mobile 3 de l'appui moulé 8 et de l'anneau de moulage du sommet 5 en déplaçant vers le bas l'ensemble comprenant le noyau 2 et la coquille mobile 3. Les flèches verticales orientées vers le bas symbolisent ce mouvement. L'amplitude de ce mouvement est surtout fonction de la hauteur nécessaire à l'étape suivante. L'appui moulé 8 est maintenu fixe relativement à la coquille fixe 4 par l'anneau de moulage du sommet 5.

L'étape 5 (à la figure 7) est constituée par l'introduction de la ceinture de renforcement circonférentiel 11 dans le volume décrit par l'ouverture du moule. Cette ceinture est maintenue dans une configuration sensiblement circulaire par un outil manipulateur 10 (que l'on décrira plus précisément par la suite). On positionne l'outil 10 (et donc la ceinture 11) dans l'axe du moule, dans un plan situé entre l'appui moulé 8 et l'ensemble comprenant le noyau 2 et la coquille mobile 3. L'appui moulé 8 demeure maintenu fixe relativement à la coquille fixe 4 par l'anneau de moulage du sommet 5.

L'étape 6 (à la figure 8) est constituée par la mise en place de la ceinture de renforcement circonférentiel 11, toujours maintenue par l'outil manipulateur 10, dans le moule, c'est à dire autour du noyau 2. Cette opération, comme le montre les flèches verticales, est réalisée par la montée de l'ensemble comprenant la coquille mobile 3 et le noyau 2. L'appui moulé 8 demeure maintenu fixe relativement à la coquille fixe 4 par l'anneau de moulage du sommet 5. L'outil manipulateur 10 peut alors se dessaisir de la ceinture 11 qui vient reposer contre le moule sous l'effet de son propre poids.

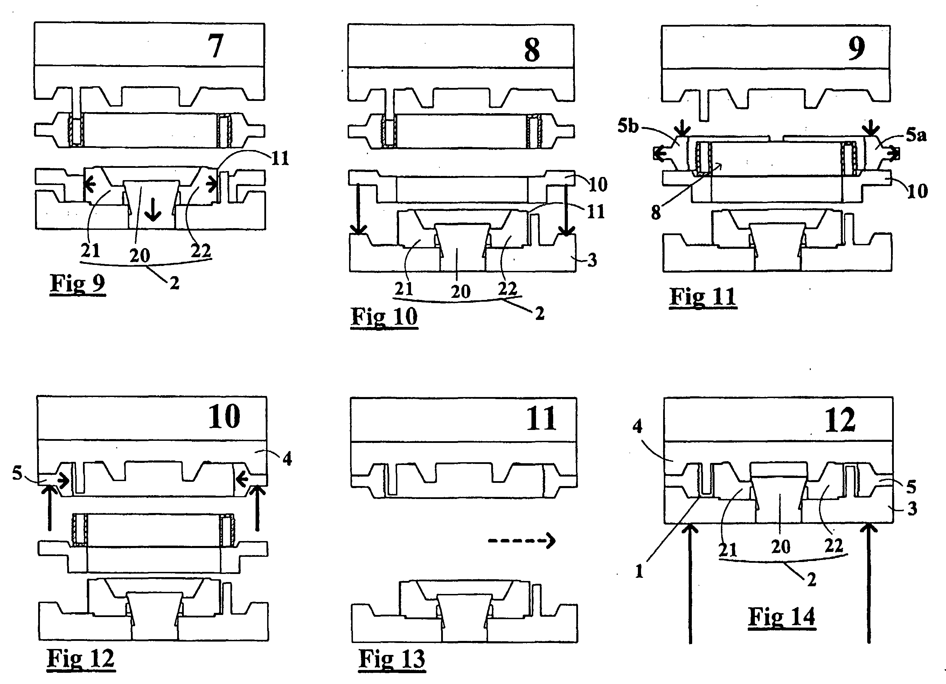

L'étape 7 (à la figure 9) est constituée par l'extension radiale des parties 21 et 22 du noyau 2 afin de bloquer en place contre la paroi de moulage la ceinture de renforcement circonférentiel 11. En raison par exemple de sa faible rigidité, on peut, alternativement, garder la ceinture 11 maintenue par l'outil manipulateur 10 jusqu'à ce que le noyau 2 soit partiellement ou totalement déployé. L'appui moulé 8 précédemment demeure maintenu fixe relativement à la coquille fixe 4 par l'anneau de moulage du sommet 5.

L'étape 8 (à la figure 10) est constituée par le dégagement de l'outil manipulateur 10. Ceci est réalisé par la descente de l'ensemble comprenant le noyau 2 et la coquille mobile 3. L'appui moulé 8 demeure maintenu fixe relativement à la coquille fixe 4 par l'anneau de moulage du sommet 5.

L'étape 9 (à la figure 11) est constituée par le dépôt sur la face supérieure de l'outil manipulateur 10 de l'appui moulé 8. Ceci est réalisé par un mouvement de descente de l'anneau 5 de moulage du sommet (ce qui achève, le cas échéant, le démoulage des doigts 40), puis par l'ouverture radiale de l'anneau. On a représenté ici deux parties séparables 5a, 5b mais ce nombre constitue le minimum nécessaire à l'ouverture, on peut choisir un nombre supérieur par exemple pour faciliter le démoulage. Les étapes 8 (figure 10) et 9 (figure 11) peuvent être menées pratiquement simultanément, pourvu que l'ouverture de l'anneau de moulage du sommet 5 n'intervienne que lorsque l'outil manipulateur 10 est suffisamment dégagé de la ceinture 11 pour que celle-ci ne puisse être endommagée par l'appui 8 ou par un déplacement de l'outil manipulateur 10 provoqué par l'appui 8.

L'étape 10 (à la figure 12) est constituée par le retour de l'anneau 5 en position de moulage, en tous cas en une position permettant le dégagement de l'outil manipulateur 10 portant l'appui 8. Rappelons que la ceinture de renforcement circonférentiel 11 reste maintenue en position autour du noyau en attente du cycle de moulage suivant.

L'étape 11 (à la figure 13) est constituée par l'effacement de l'outil manipulateur 10 portant l'appui fini 8. La pesanteur suffit à maintenir l'appui en place sur l'outil manipulateur 10 surtout si sa face supérieure comporte des moyens quelconques de rétention.

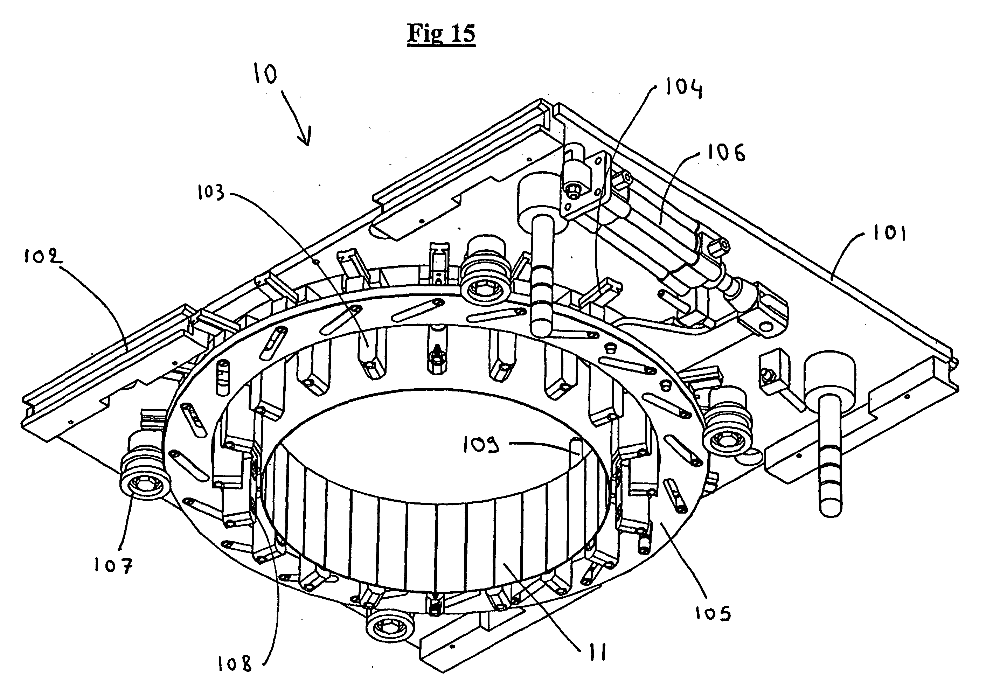

L'étape 12 (à la figure 14) est constituée par la fermeture complète du moule. La cavité de moulage 1 est close et on peut procéder à l'admission sous pression de la matière injectable constituant l'appui. lorsque la phase d'admission est réalisée, le cycle de fabrication est précisément dans la situation de l'étape 1 (figure 3).

La figure 15 montre une vue de dessous d'un outil manipulateur 10 apte à être mis en oeuvre au sein du dispositif de l'invention. Il se présente sous la forme d'un plateau 101 équipé de glissières 102 permettant une translation horizontale entre ses deux positions principales que sont une position de travail dans le volume décrit par l'ouverture du moule et une position de chargement/déchargement à l'extérieur de la presse où l'appui moulé est déchargé et où une ceinture de renforcement 11 est chargée dans l'outil manipulateur 10 en vue d'être introduite dans le moule au cycle de fabrication suivant. La ceinture 11 est maintenu, en configuration sensiblement cylindrique, par les surfaces de contact des chariots 103. Ces chariots 103 sont liés au plateau 101 par des guides en queues d'arondes 104 leur permettant un mouvement radial. La position radiale des chariots 103 est contrôlée par des pions glissant dans les fentes d'un disque rotatif 105. Ce disque rotatif 105 est guidé par des galets 107 et sa position angulaire est commandé par un vérin pneumatique 106. Un simple changement de disque 105 permet de changer de dimension de fabrication (dans les limites de la course possible des queues d'arondes 104, bien entendu).

Des moyens de maintien radial peuvent être présents afin de renforcer la tenue de la ceinture 11 contre les surfaces de contact des chariots 103. Par exemple, dans le cas d'une ceinture préfabriquée par calandrage de caoutchouc autour de fils de renforts, la nappe constituant la ceinture étant sensiblement étanche, des sources de dépression 108 peuvent de préférence être ménagées au sein des surfaces de contact de chariots. L'apport en terme de bon maintien de la ceinture peut alors permettre, par exemple, de réduire le nombre de chariots nécessaires. Par exemple, les sources de dépression 108 peuvent être des ventouses reliées à une pompe à vide.

Si au contraire, la ceinture préfabriquée ne comprend que des fils de renforts (par exemple, tenus entre eux par des fils de trames), Elle est alors poreuse et insensible à la dépression. Dans ce cas, sa tenue doit être assurée par le seul serrage radial des chariots 103.

Naturellement, d'autres moyens de maintien radial peuvent être mis en oeuvre pour renforcer la tenue de la ceinture dans l'outil manipulateur 10. Cette fonction peut être réalisée, par exemple, grâce à l'attraction magnétique dans le cas d'appui comportant des renforts métalliques.

Les surfaces de contact des chariots 103 sont lisses sur cet exemple mais elle peuvent également présenter des aspérités pour favoriser le maintien de la ceinture 11. Alternativement, les surfaces de contact des chariots 103 peuvent être pourvues de rouleaux ou galets à axe verticaux pour un meilleur centrage de la ceinture 11 lorsqu'elle est maintenue serrée dans l'outil manipulateur.

Sur la figure 15, afin de mieux visualiser les sources de dépression 108, l'outil manipulateur 10 est représenté dans sa configuration ouverte, c'est-à-dire que la ceinture 11 n'est pas maintenu dans ces conditions. Cette configuration ouverte est celle que l'outil manipulateur 10 peut avoir à partir de l'étape 8 du procédé décrit plus haut.

On aperçoit également une pièce 109 faisant protubérance sur la face supérieure du plateau 101. Cette pièce, qui vient par exemple prendre appui dans l'un des évidements 13 ou bien à l'extérieur ou à l'intérieur de l'appui lorsque celui-ci repose sur la face supérieure du plateau 101, permet de limiter les mouvements de l'appui moulé 8 en particulier lors de l'ouverture de l'anneau 5 de moulage du sommet (étape 9, figure 11) et lors de l'évacuation de l'appui. on voit ici une seule pièce 109 mais l'outil manipulateur 10 peut en comporter une pluralité. La présence de cette pièce (ou de ces pièces) n'est pas essentielle au dispositif de l'invention mais elle permet de garantir une position relativement précise de l'appui sur l'outil manipulateur 10.

Comme on le comprend en comparant la figure 15 aux figures précédentes, les chariots 103 s'intercalent entre les doigts 30 liés à la coquille mobile 3. Cependant, leur nombre peut être différent de celui des doigts 30. Selon le poids, l'état de surface et la rigidité des ceintures, on peut adapter l'espacement et donc le nombre de ces chariots 103 pour se limiter à un nombre minimal assurant une bonne tenue d'un type de ceintures déterminé. Par exemple, si la coquille mobile 3 comporte 20 doigts, l'outil manipulateur 10 peut également comporter 20 chariots, mais aussi 10, 5 ou 4 ou tout autre nombre inférieur à 20 en fonction du besoin. S'ils existent, les moyens (supplémentaires) de maintien radial peuvent être présents sur chaque chariot 103 ou sur un certain nombre d'entre eux seulement. On comprend aisément que l'homme du métier sait adapter ces différentes dispositions au cas d'espèce constitué par chaque type de fabrication (dimensions, matériaux, précision de pose recherchée, etc...).

Un avantage du dispositif de l'invention est la grande simplicité du mouvement de l'outil manipulateur 10, puisqu'il peut rester dans le même plan horizontal. Cette caractéristique est liée à la disposition verticale de l'axe du moule et au fait que la coquille mobile 3 est la coquille inférieure ce qui lui permet de venir prendre la ceinture présentée dans un plan sensiblement fixe par l'outil manipulateur 10. On peut cependant remarquer que si la ceinture 11 est suffisamment rigide et bien guidée, son positionnement dans le moule peut, alternativement, être assuré par la pesanteur après ouverture de l'outil manipulateur 10 qui se trouve centré au dessus du noyau (figures 7 à 8). Cette alternative consiste, en fait, à laisser tomber la ceinture autour du noyau situé plus bas au lieu de faire monter le noyau pour le placer au centre de la ceinture maintenue à une hauteur fixe par l'outil manipulateur 10. Cette alternative permet alors une disposition inversée du moule dans laquelle la coquille inférieure est fixe et la coquille supérieure est mobile.

Le fait de répartir les doigts 30, 40 de part et d'autre de la cavité de moulage (voir figure 2) présente un avantage du point de vue du démoulage car lorsque les coquilles 3 et 4 s'écartent l'une de l'autre, l'effort de démoulage est sensiblement symétrique ce qui limite les déformations de l'appui. Cependant, d'autres configurations sont tout à fait possibles.

Un avantage de ce procédé par rapport à celui de l'état de la technique apparaît clairement à la vue de l'ensemble des figures: les manipulations des figures 7 à 10 ont lieu avant que l'appui fini 8 soit complètement démoulé et évacué. C'est-à-dire que sa réticulation peut continuer dans de bonnes conditions bien que le cycle suivant de fabrication d'un nouvel appui soit déjà engagé. Ainsi le temps d'immobilisation de la presse nécessaire à l'introduction de la ceinture de renfort n'est plus "perdu", il est au contraire mis à profit pour la réticulation. De plus, l'échange thermique du moule avec l'air ambiant est réduit par la présence prolongée de l'appui dans le moule. Un autre avantage concerne la dépendance de la machine par rapport à la disponibilité de la main d'oeuvre. En effet, même s'il l'on procède manuellement au déchargement de l'appui moulé de l'outil manipulateur 10 et au chargement d'une ceinture de renforcement dans l'outil manipulateur 10, ces deux opérations, se déroulant à l'extérieur du moule, peuvent être menées à n'importe quel moment entre l'évacuation et l'introduction de l'outil manipulateur dans le volume d'ouverture du moule, ces opérations ne sont pas liées au cycle de la machine. On peut ainsi disposer de plusieurs minutes pour effectuer ces opérations sans que le travail de la presse n'en soit affecté. On peut également disposer de plusieurs outils manipulateurs destinés à servir une ou plusieurs presses et permettre une grande flexibilité dans l'organisation du travail de la personne chargée de mettre en place les ceintures préfabriquées et de décharger les appuis finis. De plus, les interventions manuelles ayant lieu en dehors des moules dont la température peut être très élevée, le confort et la sécurité des personnes sont améliorés. Ce travail peut également être réalisé par un automate.

Bien que l'invention ait été décrite dans un mode préféré de réalisation, permettant une automatisation importante de la fabrication en particulier grâce à la mise en oeuvre de l'outil manipulateur 10, le procédé et le dispositif de l'invention présentent également un grand intérêt en fonctionnement manuel, c'est-à-dire sans outil manipulateur 10. En effet, les opérations de démoulage et d'évacuation de l'appui moulé sont largement facilitées et accélérées par l'invention. La mise en oeuvre de l'outil manipulateur 10 permet, plus encore qu'un gain en terme de temps de cycle, une indépendance du cycle de la presse par rapport à la disponibilité immédiate de main d'oeuvre.

Les modes de réalisation décrits dans les figures concernent des presses à axe vertical. Cependant, l'invention concerne également l'application aux presses à axe horizontal, la différence concernant essentiellement les possibilités d'exploitation de la gravité.

## Revendications

1. Procédé de fabrication d'un appui (8) destiné à être monté sur une jante de véhicule, ledit appui ayant un axe A, une base (15) limitée par une face radialement intérieure (17) sensiblement cylindrique destinée à être montée autour de ladite jante, un sommet (16) destiné à supporter la charge et un corps (12) reliant ladite base (15) audit sommet (16), ladite base comprenant un renforcement circonférentiel sensiblement inextensible, ledit corps (12) comportant une pluralité d'évidements (13, 14) sensiblement axiaux débouchant d'un côté au moins dudit appui (8),ledit procédé de fabrication utilisant un moule d'axe correspondant audit axe A,
ledit moule comprenant :
- un noyau intérieur (2) assurant le moulage de ladite face radialement intérieure (17),
- un anneau (5) de moulage du sommet, ledit anneau (5) comprenant au moins deux parties (5a,5b) constitutives radialement mobiles l'une par rapport à l'autre, lesdites parties constitutives permettant de mouler une face radialement extérieure (18) dudit sommet (16),
- au moins une coquille (4) comportant une pluralité de doigts (40) axiaux pour mouler latéralement ledit corps (12) et lesdits évidements (14),
ledit noyau (2), ledit anneau (5) et ladite coquille (4) coopérant pour définir au moins partiellement une cavité (1) fermée pour mouler ledit appui (8),
ledit noyau (2)comprenant au moins deux pièces constitutives (21, 22) et étant susceptible de prendre une configuration de moulage dans laquelle lesdistes pièces constitutives forment une surface de moulage continue circonférentiellement pour mouler ladite face radialement intérieure (17), la surface de moulage étant définie par un diamètre de référence φ correspondant sensiblement au diamètre intérieur dudit appui (8), ledit noyau (2) étant également susceptible de prendre une configuration de démoulage, définie par une longueur d'enveloppe E autour de ladite surface de moulage inférieure au produit du nombre π et du diamètre de référence φ, ledit procédé de fabrication comprenant les étapes suivantes :
- placer une ceinture comportant ledit renforcement circonférentiel autour dudit noyau,
- établir la configuration de moulage dudit noyau,
- fermer le moule,
- refouler sous pression dans ledit moule une matière injectable,
- ouvrir le moule,
- établir la configuration de démoulage dudit noyau (2),
- évacuer ledit appui moulé (8),
ledit procédé étant **caractérisé en ce que**, lors d'un cycle de fabrication déterminé, ladite ceinture (11) est introduite dans un volume décrit par le mouvement d'ouverture dudit moule avant qu'un appui (8) moulé lors d'un cycle de fabrication précédent soit évacué dudit moule.

2. Procédé selon la revendication 1 **caractérisé en ce que**, lors d'un cycle de fabrication déterminé, ladite ceinture (11) est placée autour dudit noyau (2) avant qu'un appui (8) moulé lors d'un cycle de fabrication précédent soit évacué dudit moule.

3. Procédé selon l'une des revendications précédentes **caractérisé en ce que**, ledit axe dudit moule étant sensiblement vertical, ledit noyau (2), ladite coquille (4) et ledit anneau (5) ayant des mouvements relatifs le long dudit axe lors de l'ouverture du moule, ledit appui moulé demeure maintenu, après son moulage, après l'ouverture du moule et avant son évacuation, en contact avec au moins une paroi de ladite cavité de moulage et en une position verticalement plus élevée qu'un plan médian dudit volume décrit par ledit mouvement d'ouverture.

4. Procédé selon la revendication 3 dans lequel ladite au moins une paroi est constituée par la surface de moulage de l'anneau (5).

5. Procédé selon la revendication 3 ou 4, **caractérisé en ce que**, ladite ceinture (11) étant introduite à l'aide d'un outil manipulateur (10), l'appui (8) moulé lors dudit cycle précédent est évacué à l'aide dudit outil manipulateur (10).

6. Procédé selon la revendication 5, **caractérisé en ce que** l'étape d'introduction de ladite ceinture et l'étape d'évacuation dudit appui moulé (8) sont réalisées par un déplacement sensiblement horizontal dudit outil manipulateur (10).

7. Dispositif pour la fabrication d'un appui (8) destiné à être monté sur une jante de véhicule, ledit appui ayant un axe A, une base (15) limitée par une face radialement intérieure (17) sensiblement cylindrique destinée à être montée autour de ladite jante, un sommet (16) destiné à supporter la charge et un corps (12) reliant ladite base (15) audit sommet (16), ladite base comprenant un renforcement circonférentiel sensiblement inextensible, le corps comportant une pluralité d'évidements (13, 14) sensiblement axiaux débouchant d'un côté au moins dudit appui (8), ledit dispositif comprenant un moule d'axe correspondant audit axe A, ledit moule comprenant :
- un noyau intérieur (2) pour le moulage de ladite face radialement intérieure (17),
- - un anneau (5) de moulage du sommet (16), ledit anneau comprenant au moins deux parties constitutives (Sa, 5b) radialement mobiles l'une par rapport à l'autre, lesdites parties constitutives (5a, 5b) permettant de mouler une face radialement extérieure (18) dudit sommet,
- au moins une coquille (4) comportant une pluralité de doigts (40) axiaux pour mouler latéralement ledit corps (12) et lesdits évidements (14),
ledit noyau (2), ledit anneau (5) et ladite coquille (4) coopérant pour définir au moins partiellement une cavité (1) fermée pour mouler ledit appui (8),
ledit noyau (2) comprenant au moins deux pièces constitutives (21, 22) et étant susceptible de prendre une configuration de moulage dans laquelle lesdites pièces constitutives forment une surface de moulage continue circonférentiellement pour mouler ladite face radialement intérieure (17), la surface de moulage étant définie par un diamètre de référence φ correspondant sensiblement au diamètre intérieur dudit appui (8), ledit noyau (2) étant également susceptible de prendre une configuration de démoulage, définie par une longueur d'enveloppe E autour de ladite surface de moulage inférieure au produit du nombre π et du diamètre de référence φ, ledit dispositif étant **caractérisé en ce que** chacun des éléments d'un ensemble constitué par ledit anneau (5), ladite coquille (4) et ledit noyau (2) est mobile axialement par rapport aux autres éléments dudit ensemble.

8. Dispositif selon la revendication 7 dans lequel l'anneau (5) est mobile axialement par rapport à la coquille (4) afin de permettre le démoulage au moins partiel des doigts (40).

9. Dispositif selon la revendication 7 ou 8 **caractérisé en ce que** ledit axe dudit moule est sensiblement vertical.

10. Dispositif selon la revendication 9 **caractérisé en ce que** au moins une partie constituant ledit moule étant sensiblement fixe, d'autres parties constituant ledit moule étant mobiles le long de l'axe du moule, ledit dispositif permet un mouvement desdites parties mobiles orienté vers le bas afin d'ouvrir le moule.

11. Dispositif selon la revendication 9 **caractérisé en ce que**, ledit moule comportant au moins deux coquilles (3, 4) aptes à mouler latéralement des faces axiales respectivement opposée dudit corps (12), lesdites coquilles (3, 4) comportant des doigts (30, 40) aptes à mouler lesdits évidements (13, 14), lesdits doigts d'une coquille apte à mouler une face dudit corps s'intercalent circonférentiellement entre lesdits doigts d'une coquille apte à mouler la face opposée.

12. Dispositif selon la revendication 9 **caractérisé en ce qu'**il comprend un outil manipulateur (10) apte à se déplacer dans un plan sensiblement horizontal, ledit outil manipulateur 10 étant apte à introduire ladite ceinture (11) et à évacuer ledit appui moulé (8).

13. Dispositif selon la revendication 12 **caractérisé en ce que**, l'outil manipulateur (10) comportant une pluralité de surfaces de contact sensiblement verticales et radialement mobiles, ledit outil manipulateur (10) est apte à maintenir radialement ladite ceinture (11) dans une configuration sensiblement cylindrique, à positionner ladite ceinture dans l'axe du moule et à recueillir ledit appui moulé (8).

14. Dispositif selon la revendication 13 **caractérisé en ce que**, l'outil manipulateur 10 comportant des chariots (103) capables d'un mouvement radial, lesdits chariots comprennent des galets à axes parallèles à l'axe du moule capables de prendre appui sur la ceinture pour la maintenir.

15. Dispositif selon la revendication 13 **caractérisé en ce que**, l'outil manipulateur 10 comportant des moyens de maintien radial (108) de ladite ceinture (11) contre lesdites surfaces de contact, lesdits moyens sont des sources de dépression disposées au sein desdites surfaces de contact.

16. Dispositif selon la revendication 12 **caractérisé en ce que**, ledit outil manipulateur (10) comportant une face supérieure généralement horizontale apte à porter ledit appui moulé, ledit appui moulé est, lors de son évacuation, maintenu relativement audit outil manipulateur (10) par les forces de pesanteur.

## Claims

1. A process for manufacturing a support (8) intended to be mounted on a vehicle rim, said support having an axis A, a base (15) defined by a substantially cylindrical radially inner face (17) intended to be mounted around said rim, an apex (16) intended to support the load and a body (12) joining said base (15) to said apex (16), said base comprising a substantially inextensible circumferential reinforcement, said body (12) comprising a plurality of substantially axial recesses (13, 14) opening on to at least one side of said support (8), said manufacturing process using a mould of axis corresponding to said axis A,
said mould comprising:
- an inner core (2) moulding said radially inner face (17),
- a ring (5) for moulding the apex, said ring (5) comprising at least two constituent parts (5a, 5b) which are radially mobile relative to one another, said constituent parts making it possible to mould a radially outer face (18) of said apex (16),
- at least one shell (4) comprising a plurality of axial fingers (40) for laterally moulding said body (12) and said recesses (14),
said core (2), said ring (5) and said shell (4) cooperating to define at least in part a closed cavity (1) for moulding said support (8),
said core (2) comprising at least two constituent parts (21, 22) and being capable of adopting a moulding configuration in which said constituent parts form a circumferentially continuous moulding surface for moulding said radially inner face (17), the moulding surface being defined by a reference diameter φ corresponding substantially to the internal diameter of said support (8), said core (2) also being capable of adopting a demoulding configuration, defined by a length of envelopment E around said moulding surface less than the product of the number π and of the reference diameter φ, said manufacturing process comprising the following steps:
- placing a belt comprising said circumferential reinforcement around said core,
- establishing the moulding configuration of said core,
- closing the mould,
- delivering an injectable material under pressure into said mould,
- opening the mould,
- establishing the demoulding configuration of said core (2),
- removing said moulded support (8),
said process being **characterised in that**, during a given manufacturing cycle, said belt (11) is introduced into a volume described by the opening movement of said mould before a support (8) moulded during a previous manufacturing cycle has been removed from said mould.

2. A process according to Claim 1, **characterised in that**, during a given manufacturing cycle, said belt (11) is placed around said core (2) before a support (8) moulded during a previous manufacturing cycle has been removed from said mould.

3. A process according to one of the preceding claims, **characterised in that**, said axis of said mould being substantially vertical, said core (2), said shell (4) and said ring (5) having relative movements along said axis upon the opening of the mould, said moulded support remains held, after it has been moulded, after the mould has been opened and before it has been removed, in contact with at least one wall of said moulding cavity and in a position which is vertically higher than a median plane of said volume described by said opening movement.

4. A process according to Claim 3, in which said at least one wall is constituted by the moulding surface of the ring (5).

5. A process according to Claim 3 or 4, **characterised in that**, said belt (11) being introduced using a manipulating tool (10), the support (8) moulded during said previous cycle is removed using said manipulating tool (10).

6. A process according to Claim 5, **characterised in that** the step of introducing said belt and the step of removing said moulded support (8) are carried out by substantially horizontal displacement of said manipulating tool (10).

7. A device for manufacturing a support (8) intended to be mounted on a vehicle rim, said support having an axis A, a base (15) defined by a substantially cylindrical radially inner face (17) intended to be mounted around said rim, an apex (16) intended to support the load and a body (12) joining said base (15) to said apex (16), said base comprising a substantially inextensible circumferential reinforcement, the body comprising a plurality of substantially axial recesses (13, 14) opening on to at least one side of said support (8), said device comprising a mould of axis corresponding to said axis A, said mould comprising:
- an inner core (2) for moulding said radially inner face (17),
- a ring (5) for moulding the apex (16), said ring comprising at least two constituent parts (5a, 5b) which are radially mobile relative to one another, said constituent parts (5a, 5b) making it possible to mould a radially outer face (18) of said apex,
- at least one shell (4) comprising a plurality of axial fingers (40) for laterally moulding said body (12) and said recesses (14),
said core (2), said ring (5) and said shell (4) cooperating to define at least in part a closed cavity (1) for moulding said support (8),
said core (2) comprising at least two constituent parts (21, 22) and being capable of adopting a moulding configuration in which said constituent parts form a circumferentially continuous moulding surface for moulding said radially inner face (17), the moulding surface being defined by a reference diameter φ corresponding substantially to the internal diameter of said support (8), said core (2) also being capable of adopting a demoulding configuration, defined by a length of envelopment E around said moulding surface less than the product of the number π and of the reference diameter φ, said device being **characterised in that** each of the elements of an assembly constituted by said ring (5), said shell (4) and said core (2) is mobile axially relative to the other elements of said assembly.

8. A device according to Claim 7, in which the ring (5) is mobile axially relative to the shell (4) in order to permit at least partial demoulding of the fingers (40).

9. A device according to Claim 6, **characterised in that** said axis of said mould is substantially vertical.

10. A device according to Claim 9, **characterised in that** at least one part constituting said mould being substantially fixed, other parts constituting said mould being mobile along the axis of the mould, said device permits movement of said mobile parts which is oriented towards the bottom in order to open the mould.

11. A device according to Claim 9, **characterised in that**, said mould comprising at least two shells (3, 4) capable of laterally moulding respectively opposing axial faces of said body (12), said shells (3, 4) comprising fingers (30, 40) capable of moulding said recesses (13, 14), said fingers of a shell capable of moulding a face of said body mesh circumferentially between said fingers of a shell capable of moulding the opposite face.

12. A device according to Claim 9, **characterised in that** it comprises a manipulating tool (10) capable of being displaced in a substantially horizontal plane, said manipulating tool (10) being capable of introducing said belt (11) and removing said moulded support (8).

13. A device according to Claim 12, **characterised in that**, the manipulating tool (10) comprising a plurality of contact surfaces which are substantially vertical and radially mobile, said manipulating tool (10) is capable of radially holding said belt (11) in a substantially cylindrical configuration, of positioning said belt in the axis of the mould and of collecting said moulded support (8).

14. A device according to Claim 13, **characterised in that**, the manipulating tool (10) comprising carriages (103) capable of a radial movement, said carriages comprise rollers having axes parallel to the axis of the mould which are capable of bearing on the belt to hold it.

15. A device according to Claim 13, **characterised in that**, the manipulating tool (10) comprising radial means (108) for holding said belt (11) against said contact surfaces, said means are partial vacuum sources arranged within said contact surfaces.

16. A device according to Claim 12, **characterised in that**, said manipulating tool (10) comprising a generally horizontal upper face capable of bearing said moulded support, said moulded support, when removed, is held relative to said manipulating tool (10) by the force of gravity.

## Patentansprüche

1. Verfahren zur Herstellung eines Stützkörpers (8), der zur Anbringung auf einer Fahrzeugfelge bestimmt ist, wobei der genannte Stützkörper eine Achse A, eine Basis (15), die durch eine radial innere, im wesentlichen zylindrische Fläche (17) begrenzt ist und dazu bestimmt ist, rund um die genannte Felge herum angebracht zu werden, einen Scheitel (16), der dazu bestimmt ist, die Last zu tragen, und einen Körper (12) aufweist, der die genannte Basis (15) mit dem genannten Scheitel (16) verbindet, die genannte Basis eine im wesentlichen undehnbare Umfangsverstärkung aufweist, der genannte Körper (12) eine Vielzahl von im wesentlichen axialen Aussparungen (13, 14) aufweist, die mindestens auf der einen Seite des genannten Stützkörpers (8) einmünden, das genannte Herstellungsverfahren ein Formwerkzeug mit einer Achse verwendet, die der genannten Achse A entspricht,
wobei das Formwerkzeug aufweist:
- einen inneren Kern (2), der das Abformen der genannten, radial inneren Fläche (17) sicherstellt,
- einen Ring (5) zum Abformen des Scheitels, wobei der genannte Ring (5) mindestens zwei radial zueinander bewegliche Bestandteile (5a, 5b) aufweist, und wobei es die genannten Bestandteile gestatten, eine radial außenliegende Fläche (18) des genannten Scheitels (16) abzuformen, und
- mindestens eine Kokille (4), die eine Vielzahl von axialen Fingern (40) aufweist, um von der Seite her den genannten Körper (12) und die genannten Aussparungen (14) abzuformen,
wobei der genannte Kern (2), der genannte Ring (5) und die genannte Kokille (4) zusammenwirken, um mindestens teilweise einen geschlossenen Hohlraum (1) zum Abformen des genannten Stützkörpers (8) zu umreißen,
der genannte Kern (2) mindestens zwei Bestandteile (21, 22) umfaßt und in der Lage ist, eine Abformausgestaltung einzunehmen, in der die genannten Bestandteile eine in Umfangsrichtung durchgehende Abformoberfläche bilden, um die genannte, radial innere Fläche (17) abzuformen, die Abformoberfläche, die durch einen Bezugsdurchmesser Φ definiert ist, der im wesentlichen dem Innendurchmesser des genannten Stützkörpers (8) entspricht, der genannte Kern (2) auch imstande ist, eine Ausformausbildung einzunehmen, die definiert ist durch eine Umhüllungslänge E um die genannte Abformoberfläche herum, die kleiner ist als das Produkt aus der Zahl π und dem Bezugsdurchmesser Φ, und das genannte Herstellungsverfahren die folgenden Schritte umfaßt:
- Einsetzen einer Umhüllung bzw. eines Gürtels mit der genannten Umfangsverstärkung rund um den genannten Kern,
- Herstellen der Abformausbildung des genannten Kerns, und
- Schließen des Formwerkzeugs,
- Einpressen eines einspritzbaren Materials unter Druck in das genannte Formwerkzeug,
- Öffnen des Formwerkzeugs,
- Herstellen der Ausformausbildung des genannten Kerns (2),
- Entnehmen des genannten, abgeformten Stützkörpers (8),
wobei das genannte Verfahren **dadurch gekennzeichnet ist, daß** während eines bestimmten Herstellungszyklus die genannte Umhüllung bzw. der genannte Gürtel (11) in einen Raum eingebracht wird, der beschrieben ist von der Öffnungsbewegung des genannten Formwerkzeugs, bevor ein Stützkörper (8), der während eines vorhergehenden Herstellungszyklus abgeformt wurde, aus dem genannten Formwerkzeug entnommen wurde.

2. Verfahren nach Anspruch 1, **dadurch gekennzeichnet, daß** während eines bestimmten Herstellungszyklus die genannte Unhüllung bzw. der genannte Gürtel (11) rund um den genannten Kern (2) gesetzt wird, bevor ein Stützkörper (8), der während eines vorhergehenden Herstellungszyklus abgeformt wurde, aus dem genannten Formwerkzeug entnommen wird.

3. Verfahren nach einem der vorhergehenden Ansprüche, **dadurch gekennzeichnet, daß**, während die Achse des genannten Formwerkzeugs im wesentlichen vertikal steht, und während der genannten Kern (2), die genannte Kokille (4) und der genannte Ring (5) während des Öffnens des genannten Formwerkzeuges Relativbewegungen längs der genannten Achse aufweisen, der genannte, abgeformte Stützkörper nach seinem Abformen, nach dem Öffnen des Formwerkzeuges und vor der Entnahme in Berührung mit mindestens einer Wand des genannten Abformhohlraums und in einer vertikal höheren Lage verbleibt als eine Mittelebene des genannten Raumes, der von der genannten Öffnungsbewegung beschrieben wird.

4. Verfahren nach Anspruch 3, worin mindestens eine Wand von der Abformoberfläche des Ringes (5) gebildet wird.

5. Verfahren nach Anspruch 3 oder 4, **dadurch gekennzeichnet, daß** die genannte Umhüllung bzw. der genannte Gürtel (11) mit Hilfe eines Bedienungswerkzeuges (10) eingebracht und der während des vorhergehenden Zyklus abgeformte Stützkörper (8) mit Hilfe des genannten Bedienungswerkzeuges (10) entnommen wird.

6. Verfahren nach Anspruch 5, **dadurch gekennzeichnet, daß** der Schritt der Einführung der genannten Umhüllung bzw. des genannten Gürtels und der Schritt der Entnahme des genannten, abgeformten Stützkörpers (8) durch eine im wesentlichen horizontale Verlagerung des genannten Bedienungswerkzeuges (10) durchgeführt werden.

7. Vorrichtung zur Herstellung eines Stützkörpers (8), der dazu bestimmt ist, auf einer Fahrzeugfelge angebracht zu werden, wobei der genannte Stützkörper eine Achse A, eine Basis (15), die durch eine radial innere, im wesentlichen zylindrische Fläche (17) begrenzt ist und dazu bestimmt ist, rund um die genannte Felge herum angebracht zu werden, einen Scheitel (16), der dazu bestimmt ist, die Last zu tragen, und einen Körper (12) aufweist, der die genannte Basis (15) mit dem genannten Scheitel (16) verbindet, die genannte Basis eine im wesentlichen undehnbare Umfangsverstärkung aufweist, der genannte Körper eine Vielzahl von im wesentlichen axialen Aussparungen (13, 14) aufweist, die mindestens auf der einen Seite des genannten Stützkörpers (8) einmünden, und das genannte Herstellungsverfahren ein Formwerkzeug mit einer Achse verwendet, die der genannten Achse A entspricht, wobei das genannte Formwerkzeug aufweist:
- einen inneren Kern (2), der das Abformen der genannten, radial inneren Fläche (17) sicherstellt,
- einen Ring (5) zum Abformen des Scheitels (16), wobei der genannte Ring mindestens zwei radial zueinander bewegliche Bestandteile (5a, 5b) aufweist, und wobei es die genannten Bestandteile (5a, 5b) gestatten, eine radial außenliegende Fläche (18) des genannten Scheitels abzuformen, und
- mindestens eine Kokille (4), die eine Vielzahl von axialen Fingern (40) aufweist, um von der Seite her den genannten Körper (12) und die genannten Aussparungen (14) abzuformen,
wobei der genannte Kern (2), der genannte Ring (5) und die genannte Kokille (4) zusammenwirken, um mindestens teilweise einen geschlossenen Hohlraum (1) zum Abformen des genannten Stützkörpers (8) zu umreissen,
der genannte Kern (2) mindestens zwei Bestandteile (21, 22) umfaßt und in der Lage ist, eine Abformausgestaltung einzunehmen, in der die genannten Bestandteile eine in Umfangsrichtung durchgehende Abformoberfläche bilden, um die genannte, radial innere Fläche (17) abzuformen, die Abformoberfläche, die durch einen Bezugsdurchmesser Φ definiert ist, der im wesentlichen dem Innendurchmesser des genannten Stützkörpers (8) entspricht, der genannte Kern (2) auch imstande ist, eine Ausformausbildung einzunehmen, die definiert ist durch eine Umhüllungslänge E um die genannte Abformoberfläche herum, die kleiner ist als das Produkt aus der Zahl π und dem Bezugsdurchmesser Φ, und die genannte Vorrichtung **dadurch gekennzeichnet ist, daß** jedes der Elemente einer Anordnung, die von dem genannten Ring (5), der genannten Kokille (4) und dem genannten Kern (2) gebildet ist, bezüglich der anderen Elemente der genannten Anordnung axial beweglich ist.

8. Vorrichtung nach Anspruch 7, worin der Ring (5) axial bezüglich der Kokille (4) beweglich ist, um das mindestens teilweise Ausformen der Finger (40) zu gestatten.

9. Vorrichtung nach Anspruch 6, **dadurch gekennzeichnet, daß** die genannte Achse des genannten Formwerkzeuges im wesentlichen vertikal ist.

10. Vorrichtung nach Anspruch 9, **dadurch gekennzeichnet, daß** mindestens ein Teil, der das genannten Formwerkzeug zusammensetzt, im wesentlichen fest ist, während andere Teile, die das genannte Formwerkzeug bilden, längs der Achse des Formwerkzeuges beweglich sind, wobei die genannte Vorrichtung eine Bewegung der genannten, beweglichen Teile, nach unten gerichtet, gestattet, um das Formwerkzeug zu öffnen.

11. Vorrichtung nach Anspruch 9, **dadurch gekennzeichnet, daß**, während das genannte Formwerkzeug mindestens zwei Kokillen (3, 4) aufweist, die dazu eingerichtet sind, seitlich axiale, jeweils gegenüberliegende Flächen des genannten Körpers (12) abzuformen, die genannten Kokillen (3, 4) Finger (30, 40) aufweisen, die dazu eingerichtet sind, die genannten Aussparungen (13, 14) abzuformen, und die genannten Finger einer Kokille, die dazu eingerichtet ist, eine Fläche des genannten Körpers abzuformen, in Umfangsrichtung zwischen die genannten Finger einer Kokille eingeschoben sind, die dazu eingerichtet ist, die entgegengesetzte Fläche abzuformen.

12. Vorrichtung nach Anspruch 9, **dadurch gekennzeichnet, daß** sie ein Bedienungswerkzeug (10) aufweist, das dazu eingerichtet ist, sich in einer im wesentlichen horizontalen Ebene zu verlagern, wobei das genannte Bedienungswerkzeug 10 dazu eingerichtet ist, die genannten Umhüllung bzw. den genannten Gürtel (11) einzubringen und den genannten, abgeformten Stützkörper (8) zu entnehmen.

13. Vorrichtung nach Anspruch 12, **dadurch gekennzeichnet, daß**, während das Bedienungswerkzeug (10) eine Vielzahl von im wesentlichen vertikalen und radial beweglichen Berührungsflächen aufweist, das genannte Bedienungswerkzeug (10) dazu eingerichtet ist, die genannte Umhüllung bzw. den genannten Gürtel (11) radial in einer im wesentlichen zylindrischen Ausbildung zu halten, die genannte Umhüllung bzw. den genannten Gürtel in der Achse des Formwerkzeuges zu positionieren und den genannten, abgeformten Stützkörper (8) einzuholen.

14. Vorrichtung nach Anspruch 13, **dadurch gekennzeichnet, daß** das Bedienungswerkzeug (10) Schlitten (103) aufweist, die zu einer radialen Bewegung in der Lage sind, wobei die genannten Schlitten Rollen mit Achsen aufweisen, die parallel zur Achse des Formwerkzeuges sind und in der Lage sind, auf der genannten Umhüllung bzw. dem genannten Gürtel aufzusitzen, um sie bzw. ihn zu halten.

15. Vorrichtung nach Anspruch 13, **dadurch gekennzeichnet, daß**, während das Bedienungswerkzeug (10) Mittel (108) zum radialen Gegenhalten der genannten Umhüllung bzw. des genannten Gürtels (11) gegen die genannten Berührungsflächen aufweist, die genannten Mittel Unterdruckquellen sind, die im Bereich der genannten Berührungsflächen angeordnet sind.

16. Vorrichtung nach Anspruch 12, **dadurch gekennzeichnet, daß**, während das genannte Bedienungswerkzeug (10) eine insgesamt horizontale obere Fläche aufweist, die dazu eingerichtet ist, den genannten, abgeformten Stützkörper zu tragen, der genannte, abgeformte Stützkörper während seiner Entnahme relativ zum genannten Bedienungswerkzeug (10) durch Gravitationskräfte gehalten ist.
